# EUROPÄISCHE PATENTSCHRIFT

(11) **EP 0 541 015 B1**
(45) Veröffentlichungstag und Bekanntmachung des Hinweises auf die Patenterteilung: **22.05.1996**
(21) Anmeldenummer: 92118658.1
(22) Anmeldetag: 31.10.1992
(51) Int. Cl.: H02P 7/282

(54) **Verfahren zum Steuern eines Antriebes einer Rotationsdruckmaschine**
Method of controlling a rotary press drive
Méthode de contrôle d'un entraînement dans une rotative

(30) Priorität: 07.11.1991 DE 4136596; 17.09.1992 DE 4231024
(43) Veröffentlichungstag der Anmeldung: 12.05.1993
(73) Patentinhaber: KOENIG & BAUER-ALBERT AKTIENGESELLSCHAFT, D-97080 Würzburg (DE)
(72) Erfinder: Leuerer, Dietrich, W-8700 Würzburg (DE)

(56) Entgegenhaltungen:
- EP-A- 0 223 101
- DE-A- 1 186 141
- BBC HANDBUCH F R ELEKTROMOTOREN 1973, Seiten 583 - 584
- PATENT ABSTRACTS OF JAPAN vol. 9, no. 4 (E-288)(1727) 10. Januar 1985 & JP-A-59 153489

## Beschreibung

Die Erfindung betrifft ein Verfahren zum Steuern eines Antriebes einer Rotationsdruckmaschine entsprechend dem Oberbegriff des Patentanspruches 1.

Entsprechend dem BBC-Handbuch für Elektromotoren, 2. Auflage 1973, Verlag W. Giradet, Essen, Seiten 583/584, ist es bei elektrischen Maschinen mit Bürsten bekannt, daß der Verschleiß der Bürsten oft davon abhängig ist, ob die Bürsten in ihrem bestmöglichen Belastungsbereich arbeiten. Deshalb wird jeder Motor so mit Bürsten bestückt, daß die Bürstenbelastung dieser Forderung entspricht. Weicht die dauernd von dem Motor im Betrieb geforderte Leistung stark von der Nennleistung nach unten ab, so kann es zweckmäßig sein, die Bürstenbestückung zu vermindern, um den Verschleiß herabzusetzen.

Nachteilig dabei ist jedoch, daß bei nachfolgend erforderlicher erhöhter Leistung, wie das z. B. dann der Fall ist, wenn vorher ausgeschaltete Druckwerke oder Falzapparate einer Druckmaschine kurz- oder mittelfristig wieder zugeschaltet werden müssen, somit die Bürstenanzahl infolge des erhöhten Ankerstrombedarfs wieder erhöht werden muß. Dies erfordert einen Mehraufwand z. B. dadurch, daß die einzelnen Ströme gemessen und die Bürstenanzahl festgelegt werden muß und daß die Bürsten auf dem Kommutator wieder eingeschliffen werden müssen.

Aus der JP-A-59 153 489 ist es bekannt, den Anlaufstrom eines Gleichstrom-Nebenschlußmotors durch Erhöhen des Erregerstroms nach oben zu begrenzen.

Die DE-B-1 186 541 nutzt die für Gleichstrom-Nebenschlußmotoren allgemein bekannte Abhängigkeit der Drehzahl von Ankerspannung, Ankerstrom und Erregerstrom zur Steuerung der Drehzahl. Dabei wird insbesondere ein Ankerstrom wechselnder Höhe zur Drehzahlsteuerung eingesetzt.

Gemäß der EP-A-0 223 101 wird jeweils für eine vorgegebene Motorbelastung der Erregerstrom auf einem empirisch ermittelten und gespeicherten Wert gehalten, der ein vorbestimmtes Verhältnis zwischen Ankerspannung und Drehzahl oder zwischen Ankerstrom und Drehmoment festlegt.

Der Erfindung liegt die Aufgabe zugrunde, ein Verfahren zum Steuern von Antrieben einer Rotationsdruckmaschine mit Gleichstrom-Nebenschlußmotoren zu schaffen, mittels welchem bei einer vorgewählten Drehzahl und einer veränderbaren Last die Bürsten in einem definierten, bürstenverschleißarmen Ankerstrombereich arbeiten.

Erfindungsgemäß wird diese Aufgabe durch das Kennzeichen des Patentanspruches 1 gelöst.

Die durch die Erfindung erzielbaren Vorteile bestehen insbesondere darin, daß sowohl die Abnutzung der Bürsten als auch die Abnutzung des Kollektors, auch bei veränderbarer Last, reduziert wird. Bei Lastveränderungen ist keine Anpassung der Bürsten erforderlich.

Die Erfindung soll nachstehend an mehreren Ausführungsbeispielen näher erläutert werden. Die zugehörigen Zeichnungen zeigen
- Fig. 1: das Prinzipschaltbild der Steuervorrichtung;
- Fig. 2: ein Flußdiagramm;
- Fig. 3 bis 5: weitere Ausführungsbeispiele der Steuervorrichtung.

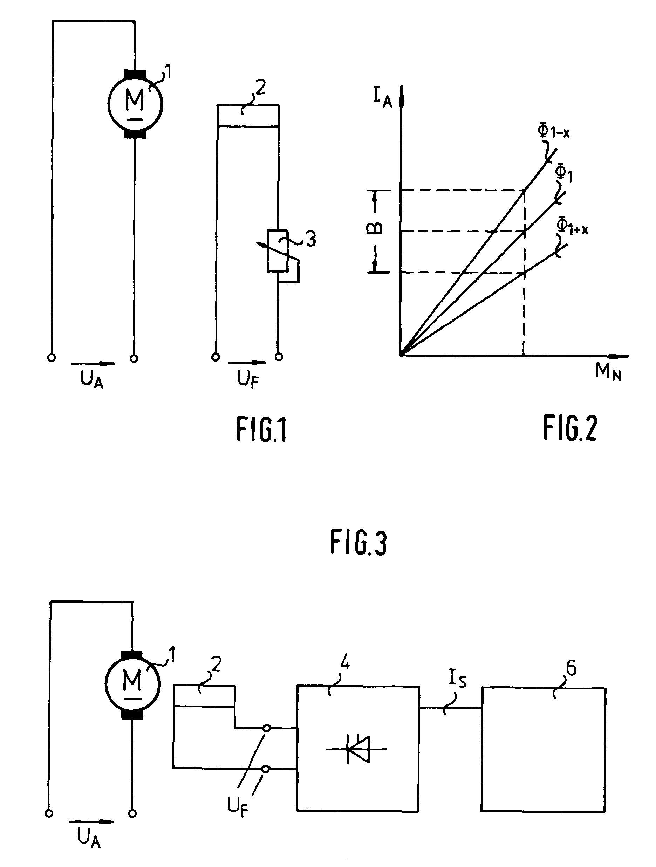

Gemäß Fig. 1 besteht der Gleichstrom - Nebenschlußmotor aus einer Ankerwicklung 1 und einer Feldwicklung 2, an denen jeweils eine Ankerspannung U_{A} und eine Feldspannung U_{F} anliegt. Zur Feldwicklung 2 ist ein Regelwiderstand 3 in Reihe geschaltet, mit welchem der magnetische Fluß der Feldwicklung einstellbar ist. Gemäß Fig. 2 ist der Ankerstrom I_{A} über dem Arbeitsdrehmoment M_{N} in Abhängigkeit von verschiedenen magnetischen Flüssen Φ dargestellt.

Aus dem Diagramm ist ersichtlich, daß bei einem einheitlichen Arbeitsdrehmoment M_{N} und einem Erregungszuwachs Φ 1 + x ein relativ niedrigerer Ankerstrom I_{A} erzielt wird. Bei einem Abfall der Erregung Φ 1 - x fließt ein relativ hoher Ankerstrom I_{A}.

In dem Bereich B, welcher sich zwischen magnetischen Flußwerten Φ 1 + x und Φ 1 - x bei gleichem Drehmoment M_{N} befindet, befindet sich beispielsweise der Bereich der typenspezifischen Stromdichte der Kohlebürsten des Gleichstrom - Nebenschlußmotors 1; 2.

Gemäß Fig. 3 ist die Feldwicklung 2 mit einem Thyristorsteller 4 verbunden, der von einer Maschinensteuerung 6 mit der Sollstromstärke I_{S} beaufschlagt ist. Die Maschinensteuerung 6 ermittelt den erforderlichen Sollwert I_{S} über die Maschinenbelegung und Papierführung. Über die Erregerspannung U_{F} wird der Ankerstrom I_{A} im Vorzugsbereich B nach Fig. 2 gehalten. Die Maschinensteuerung 6 kann aus einem Rechner oder aus einer programmierbaren Steuerung bestehen.

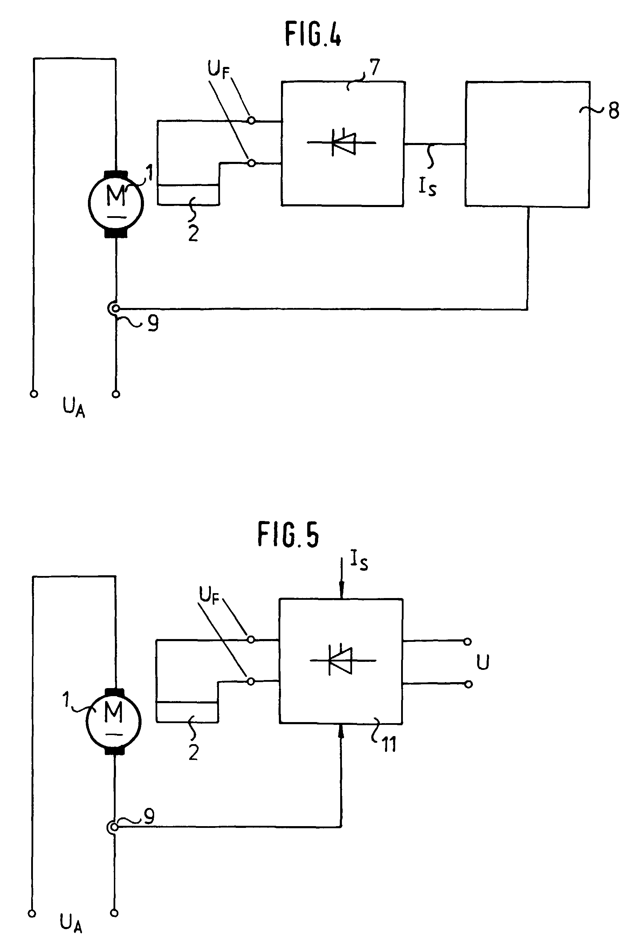

Gemäß Fig. 4 ist die Feldwicklung 2 über einen Thyristorsteller 7 und eine Anpassungslogik 8 über einen Stromwerterfasser 9 mit dem Nebenschlußmotor 1 verbunden. Der Stromwerterfasser 9 kann als Stromwandler ausgebildet sein und erfaßt den Ankerstrom I_{A}.

Die Anpassungslogik 8 erfaßt den Ankerstrom I_{A} und vergleicht diesen mit dem Nenn-Ankerstrom, bei welchem die geringste Bürstenabnutzung erzielt wird und regelt selbständig über die Änderung des magnetischen Flusses Φ den Ankerstrom I_{A} im Vorzugsbereich B nach Fig. 2. Die Anpassungslogik 8 kann aus einem Rechner, insbesondere einem Arbeitsvorbereitungsrechner bestehen.

Gemäß Fig. 5 ist die Feldwicklung 2 des Nebenschlußmotors 1; 2 über einen Thyristorsteller 11 mit dem Wechselstromnetz U verbunden. Der Stromwerterfasser 9 meldet den Ankerstrom I_{A} an den Thyristorsteller 11. Der Thyristorsteller 11 wird mit dem Sollwert I_{S} direkt beaufschlagt. Über eine träge Regler- und Istwertbeschaltung im Thyristorsteller 11 wird erreicht, daß eine kurzzeitige Änderung des Ankerstromes I_{A} noch keine Änderung des magnetischen Flusses Φ bewirkt, der Ankerstrom I_{A} jedoch mittelfristig in dem Vorzugsbereich B geregelt wird. Die Beschleunigungsphasen werden hierbei nicht zur Regelung der Erregung benutzt. Für die Maschinensteuerung 6 sowie für die Anpassungslogik 8 kann ein Computer eingesetzt werden.

Der Ankerstrom I_{A} entspricht der Summe aller Bürstenströme.

### Teileliste

- 1: Ankerwicklung
- 2: Feldwicklung
- 3: Regelwiderstand
- 4: Thyristorsteller
- 5: -
- 6: Maschinensteuerung
- 7: Thyristorsteller
- 8: Anpassungslogik
- 9: Stromwerterfasser
- 10: -
- 11: Thyristorsteller

- U_{A}: Ankerspannung
- U_{F}: Feldspannung
- I_{A}: Ankerstrom
- M_{N}: Nenndrehmoment
- Φ: magnetischer Fluß
- B: Bereich
- I_{S}: Sollstromdichte
- U: Wechselstromnetz
- M_{D}: Drehmoment

## Patentansprüche

1. Verfahren zum Steuern für Antriebe in Rotationsdruckmaschinen mit Gleichstrom-Nebenschlußmotoren, dadurch gekennzeichnet, daß ein Ankerstrom (I_{A}) bei vorgewählter konstanter Drehzahl und konstantem Drehmoment (M_{D}) über die Veränderung des magnetischen Flusses (Φ) so gesteuert oder geregelt wird, daß der Ankerstrom (I_{A}) in einem nach oben und unten begrenzten Strombelastungsbereich (B) geringster Bürstenabnutzung liegt.

2. Verfahren nach Anspruch 1, dadurch gekennzeichnet, daß die Auswahl des Ankerstromes (I_{A}) aus dem Strombelastungsbereich (B) der geringsten Bürstenabnutzung über einen Computer (6; 8) geregelt wird.

## Claims

1. A method of controlling drives in rotary printing machines, having direct current shunt-wound motors, characterized in that an armature current (I_{A}) is controlled or regulated, at a predetermined constant speed and constant torque (M_{D}), by altering the magnetic flux (φ) such that the armature current (I_{A}) is within an upwardly and downwardly delimited current load range (B) of minimum brush wear.

2. A method according to Claim 1, characterized in that selection of the armature current (I_{A}) from the current load range (B) of minimum brush wear is regulated by way of a computer (6; 8).

## Revendications

1. Procédé de régulation de dispositifs d'entraînement dans des machines à imprimer rotatives à moteurs en dérivation à courant continu, caractérisé en ce que, pour une vitesse de rotation constante présélectionnée et un couple constant (M_{D}), un courant d'induit (I_{A}) est commandé ou régulé en faisant varier le flux magnétique (Φ), de façon que le courant d'induit (I_{A}) se trouve dans une plage de charge de courant (B) qui est limitée vers le haut et vers le bas et qui correspond à une usure minimale des balais.

2. Procédé selon la revendication 1, caractérisé en ce que le choix du courant d'induit (I_{A}) dans la plage de charge de courant (B) correspondant à une usure minimale des balais est effectué par un ordinateur (6 ; 8).
